# EUROPEAN PATENT SPECIFICATION

(11) **EP 4 437 048 B1**
(45) Date of publication and mention of the grant of the patent: **25.02.2026**
(21) Application number: 23793706.5
(22) Date of filing: 17.10.2023
(51) Int. Cl.: C09D 11/101, C09D 11/03

(54) **ENERGY CURABLE INK, COATING AND PRIMER COMPOSITIONS CONTAINING HIGHLY ALKOXYLATED GLYCEROL ACRYLATES FOR RETORT PACKAGING APPLICATIONS**
ENERGIEHÄRTBARE TINTE, BESCHICHTUNGS- UND PRIMERZUSAMMENSETZUNGEN MIT HOCHALKOXYLIERTEN GLYCEROLACRYLATEN FÜR RETORTENVERPACKUNGSANWENDUNGEN
ENCRE DURCISSABLE PAR ÉNERGIE, COMPOSITIONS DE REVÊTEMENT ET D'APPRÊT CONTENANT DES ACRYLATES DE GLYCÉROL HAUTEMENT ALCOXYLÉS POUR DES APPLICATIONS D'EMBALLAGE EN AUTOCLAVE

(30) Priority: 18.10.2022 EP 22202285
(43) Date of publication of application: 02.10.2024
(73) Proprietor: Sun Chemical B.V., 1382 LV Weesp (NL)
(72) Inventor: SCHOLZ, Andreas, 63791 Karlstein am Main (DE); DIEKER, Jurgen, 63791 Karlstein am Main (DE)
(74) Representative: Carpmaels & Ransford LLP
(86) International application number: PCT/EP2023/078775
(87) International publication number: WO 2024/083791

(56) References cited:
- WO-A1-2016/000477
- CN-A- 106 986 855
- GB-A- 2 284 787
- US-A1- 2013 044 167
- US-A1- 2019 106 583
- US-B1- 6 248 804

## Description

### FIELD

The present invention relates to energy curable ink, coating or primer compositions which are particularly suitable for retort packaging applications. The ink, coating or primer compositions contain a 9-fold or higher alkoxylated glycerol acrylate monomer.

### BACKGROUND OF THE INVENTION

Coatings, primers and inks used in packaging and certain converting purposes may need resistance to heat or steam. Such resistance is difficult to achieve based on the components in the composition, the printing process, the substrate used in the packaging and the use of the packaging itself. One such printing process is flexographic printing. Flexographic printing is an evolving process. Through the years, advances in press components have enabled printers to achieve higher levels of quality and visual impact. One of the most notable recent developments is the escalating use of energy-curable (EC) inks, notably ultraviolet (UV) and electron beam (EB) inks. Offering significant advantages over water and solvent based inks, UV and EB-inks (in the ensuing text referred to as EC-inks) are experiencing explosive growth in the packaging print industry. As industry demands for visual impact increase, printers seek to add color density while preserving or even enhancing image quality. It is the ability of EC inks to positively impact on color density and image quality, while facilitating improvements in printing efficiency that begins to explain its rising popularity. The other and most significant reason for EC inks' growth is concern over environmental issues. All types of inks may have many ingredients, but fundamentally an ink has a component which provides color (pigment, dye or colorant) and a liquid base which provides a means of transportation from the ink fountain to the substrate. Other components and additives are included in the ink formulation to control the ink distribution process, fix the pigment onto the substrate, and enhance specific characteristics of the printed image.

When inks and coating compositions are applied to the non-contact surface of packaging intended for foodstuffs, then any contamination from the package impacting the foodstuff should be prevented.

There are two major ways in which the foodstuff can be affected; through migration and by set-off migration. In the case of polymeric substrates, the most likely route for migratable species from the ink contaminating the foodstuff is by set-off migration. This is where printed matter is stacked or reeled prior to it being filled with food. Thus, the ink comes into contact with what will become the food-contact surface of the package and can migrate onto the contact surface and contaminate the foodstuff.

However, when the plastic film exhibits poor barrier properties, such as with polyethylene, through migration can occur as well, especially at higher migration temperatures such as 60°C, where the film expands, and small molecules can migrate more easily through the material.

Even though there are no universally agreed regulations on food compliance, there are guidelines and recommendations, for example given by the association of European Printing ink manufactures (EUPIA). EUPIA also provides guidelines on how to measure the potential level of migratables arising from printed matter.

Such specific migration limits are given for example in the Swiss Ordinance Annex 10 of the Federal Department of Home Affairs from May 1, 2017 on materials and articles intended to come into contact with foodstuffs, or the EU plastics directive. To be compliant, the specific migration limits (SML) for the acrylates and other listed materials as stated in these doctrines should not be exceeded.

A need exists for an EC ink, coating and primer composition that can be used on difficult substrate applications such as aluminum lids and containers but may also be useful for other difficult substrates such as foils, plastic films and paper. Further, a need exists for such inks to be resistant to heat and water, while still maintaining gloss and color strength. A further need exists for such an ink to maintain adhesion and scratch resistance. A further critical need is that the inks provide a regulation compliant low level of migration for use in any kind of food-packaging or other sensitive packaging application.

US6248804 discloses UV-curable inks for printing logos on golf balls, and these inks may optionally contain an alkoxylated glycerol triacrylate (with an unspecified degree of alkoxylation and molecular weight) as an agent to reduce viscosity, but there is no mention of retort packaging applications or improving migration properties.

US 2019/106583 A1 discloses a radiation curable ink formulation comprising specific amounts of at least one trifunctional (meth)acrylate monomer, at least one (meth)acrylate monomer with a functionality of 4 or higher, one or more monofunctional (meth)acrylate monomers and/or difunctional(meth)acrylate monomers, at least one amine synergist, one or more (meth)acrylate oligomers and one or more pigment and/or additive.

WO 2016/000477 A1 discloses (4-phenyl benzoyl) benzoate, a method of synthesizing it and its use as a photoinitiator.

### SUMMARY OF INVENTION

The needs discussed above are met by the energy curable inks, coatings and primers of the present invention, which contain a highly alkoxylated glycerol acrylate monomer.

The present invention provides an energy curable ink, coating or primer composition according to claim 1 comprising:
(a) 9-fold or higher alkoxylated glycerol acrylate monomer with a molecular weight higher than 500g/mol in an amount between 10-80wt-% based on the total weight of the composition; and
(b) one or more oligomers.

Preferably, the ink, coating or primer composition further comprises one or more reactive diluents which are not 6-fold or higher alkoxylated glycerol acrylate monomers.

The ink, coating or primer composition preferably further comprises one or more photoinitiators, although no photoinitiator is added if EB or high energy UV-C curing applications are desired.

The ink, coating or primer composition optionally further comprises one or more colorants.

The present invention also provides a printed article comprising said energy curable ink, coating or primer composition. Preferably, the article is a retortable package.

The present invention also provides the use of a 9-fold or higher alkoxylated glycerol acrylate monomer with a molecular weight higher than 500g/mol in an amount between 10-80wt-% based on the total weight of the composition in an ink, coating or primer composition suitable for retort packaging applications.

The present invention also provides a method of preparing a printed article comprising applying the energy curable ink, coating or primer composition of the invention to a substrate.

The present invention also provides a method of retort packaging a foodstuff, comprising providing the printed retortable package of the invention and filling the retortable package with the foodstuff.

Preferred embodiments of the energy curable ink, coating or primer composition, the printed article, the use and the methods disclosed above are identified in the dependent claims and in the following detailed description.

### DETAILED DESCRIPTION

By using glycerol acrylate monomers with a degree of alkoxylation of 9 or higher in the formulation of energy curable coatings, ink and primers (preferably flexographic coatings, inks and primers), coatings, inks and primers are described which are suitable for retort applications on difficult substrates such as aluminium and which are compliant regarding migration.

The compositions may be used to adhere on substrates like foils, metallized surfaces and various plastic substrates like polyethylenes, polypropylenes, polyesters, polystyrene, and the like. The compositions may be used on retort packages. Accordingly, the present invention relates to primer, coating and ink compositions (subsequently referred to simply as "inks") which are especially suitable for adhesion to substrates including aluminum foils and containers, sterilizable plastic or metallized films. Additionally, the inventive ink compositions are resistant to water, steam and heat. The inventive ink compositions are also scratch resistant and exhibit excellent adhesion. The inventive ink compositions exhibit good gloss (about 50-80%); good adhesion (pass industry standard tape tests); good scratch resistance; and good color strength. Further, the inventive ink compositions maintain such properties when exposed to heat and water and steam.

Moreover, the inventive samples were embossed and die cut to convert them to a lid and meet the necessary requisites of conversion by preserving the edges while the print surfaces exhibit good flexural strength.

The inventive energy curable ink compositions exhibit improved performance compared to compositions which do not include a highly alkoxylated glycerol acrylate monomer in the amounts described herein. Comparative ink formulations not comprising the highly alkoxylated glycerol acrylate monomer that is present in the compositions of the present invention do not pass the retortability test or show high levels of migratables and/or defects after retort.

These properties make the inks of the present invention suitable for low migration compliant food packaging including pet food applications.

The inventive inks are suitable for sensitive packaging such as food packaging, due to the formulations containing no low-molecular weight species that are extracted and prone to migration as tested by GC-MS and HPLC-MS-MS.

### Compositions of the invention

The present invention provides an energy curable ink, coating or primer composition according to claim 1 comprising:
(a) 9-fold or higher alkoxylated glycerol acrylate monomer with a molecular weight higher than 500g/mol in an amount between 10-80wt-% based on the total weight of the composition; and
(b) one or more oligomers.

Preferably, the ink, coating or primer composition further comprises one or more reactive diluents which are not 6-fold or higher alkoxylated glycerol acrylate monomers. The one or more reactive diluents may be selected from the group consisting of diacrylates, triacrylates and higher acrylated monomers containing more than three acrylate groups, preferably higher acrylated monomers containing more than three acrylate groups.

The ink, coating or primer composition preferably further comprises one or more photoinitiators, although no photoinitiator is added if EB or high energy UV-C curing applications are desired.

The ink, coating or primer composition may optionally further comprise one or more colorants.

The compositions of the invention may optionally further comprise one or more additional ingredients, including stabilizers, sensitizers, wetting agents, defoamers and acids, as explained in further detail below.

### Highly alkoxylated glycerol monomers

The energy curable ink, coating or primer composition contains a 9-fold or higher alkoxylated glycerol acrylate monomer with a molecular weight higher than 500g/mol in an amount between 10-80wt-% based on the total weight of the composition. Preferably, the molecular weight of the alkoxylated glycerol acrylate monomer is higher than 750 g/mol.

An alkoxylated glycerol acrylate monomer refers to a glycerol molecule in which at least one of the hydroxy groups is alkoxylated with one or more repeating alkoxy units, and the alkoxy chain terminates with an acrylate group. The alkoxy groups may be linear or branched. The alkoxylated glycerol acrylate monomer used in the compositions of the present invention is 9-fold or higher alkoxylated, which means that the total number of alkoxy groups present in the molecule is at least 9.

The maximum degree of alkoxylation is not particularly limited, but may be around 30. The alkoxylated glycerol acrylate monomer may preferably be 9 to 20-fold alkoxylated or even more preferably 9 to 15-fold alkoxylated.

Preferably, the alkoxylated glycerol acrylate monomer is an alkoxylated glycerol triacrylate.

Preferably, the alkoxy groups in the alkoxylated glycerol acrylate monomer are C2-C10 alkoxy groups, more preferably C2-C6 alkoxy groups, even more preferably C2-C4 alkoxy groups. Most preferably, the alkoxy groups are propoxy groups.

In view of the preferences explained above for the degree of alkoxylation and the nature of the alkoxy groups, it will be evident to the skilled person that a 9-fold or higher alkoxylated glycerol triacrylate is preferred, especially a 9 to 15-fold alkoxylated glycerol triacrylate, in which the alkoxy groups are C2-C6 alkoxy groups, especially propoxy groups.

It is especially preferred that the alkoxylated glycerol acrylate monomer is a propoxylated glycerol triacrylate (GPTA).

The structure of a propoxylated glycerol triacrylate (GPTA) is as follows:

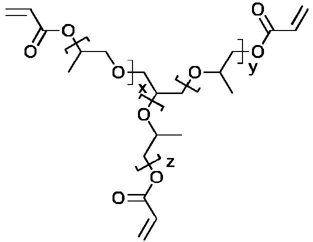

In a 9-fold or higher propoxylated GPTA, the sum of x+y+z is 9 or more. As a person skilled in the art will readily appreciate, any sample of an alkoxylated glycerol acrylate monomer will have a distribution (typically a Gaussian distribution) of alkoxylation values. The quoted degree of alkoxylation is the average degree of alkoxylation present in the sample, typically the mean degree of alkoxylation. If the average degree of propoxylation x+y+z is about 9, the substance is called PO9-GPTA. "PO9-GPTA" and "PO9GPTA" are used interchangeably herein.

Amongst all possible alkoxylated glycerol acrylate monomers, the most preferred alkoxylated glycerol acrylate monomer to use in compositions of the present invention is PO9-GPTA.

The highly alkoxylated glycerol acrylate monomer is present in an amount between 10-80wt-% based on the total weight of the composition, preferably an amount between 20-70wt-% based on the total weight of the composition, more preferably 25-65 wt-% based on the total weight of the composition.

As used herein, "molecular weight" or "average molecular weight" is a reference to the weight average molecular weight (Mw). The molecular weight is suitably measured by techniques known in the art such as gel permeation chromatography (GPC). Preferably, molecular weight is measured by comparison with a polystyrene standard. For instance, molecular weight determination may be conducted on a Hewlett-Packard 1050 Series HPLC system equipped with two GPC Ultrastyragel columns, 103 and 104 Å (5 µm mixed, 300 mm x 19 mm, Waters Millipore Corporation, Milford, MA, USA) and THF as mobile phase. The skilled person will appreciate that this definition of molecular weight applies to materials which typically have a molecular weight distribution, as may be the case for the highly alkoxylated glycerol acrylate monomers used in the compositions of the present invention.

### Oligomers

The inventive ink compositions contain one or more oligomers. The oligomers aid in adhesion to the substrate. As used herein, the term "oligomer" does not include the 9-fold or higher alkoxylated glycerol acrylate monomer that is present in the compositions of the invention, so the amount of this substance does not contribute to the amount of oligomer that is present.

The one or more oligomers may be selected from aminoacrylates, (meth-)acrylates, polyester acrylates, urethane acrylates, polyether acrylates and combinations thereof.

Preferably, the one or more oligomers are selected from a urethane acrylate, an aminoacrylate and a polyether acrylate, or combinations thereof. The urethane acrylate is preferably an aliphatic urethane acrylate. The aminoacrylate is preferably an aliphatic aminoacrylate. The polyether acrylate may be, for example, a tetrafunctional polyether acrylate.

The one or oligomers may be present in a total amount of about 5-60 wt.-%, based on the total weight of the composition. Preferably, the oligomers are present in a total amount of about 10-40 wt.-% based on the total weight of the composition.

When the composition contains a urethane acrylate, the urethane acrylate is preferably present in an amount of 5-30wt-%, more preferably 5-20 wt-%, based on the total weight of the composition. When the composition contains an aminoacrylate, the aminoacrylate is preferably present in an amount of 5-30wt-%, more preferably 10-20 wt-%, based on the total weight of the composition. When the composition contains a polyether acrylate, the polyether acrylate is preferably present in an amount of 5-30wt-%, more preferably 10-20 wt-%, based on the total weight of the composition.

### Reactive diluents

The inventive ink compositions may further comprise one or more reactive diluents that are not 6-fold or higher alkoxylated glycerol acrylate monomers. The reactive diluent aids in viscosity modification of the composition. Preferably, one or more such reactive diluents is present in the compositions of the invention.

The one or more reactive diluents may be selected from the group consisting of diacrylates, triacrylates and higher acrylated monomers containing more than three acrylate groups. Higher acrylated monomers containing more than three acrylate groups are preferred.

Diacrylates that are suitable for use as reactive diluents in the present invention include but are not limited to dipropylene glycol diacrylate, tripropylene glycol diacrylate, butanediol diacrylate, hexanediol diacrylate, dipropylene glycol dimethacrylate, tripropylene glycol dimethacrylate, butanediol dimethacrylate and hexanediol dimethacrylate, and combinations thereof.

Tri-acrylates that are suitable for use as reactive diluents in the present invention include but are not limited to trimethylol propane triacrylate, ethoxylated trimethylol propane triacrylate, glycerolpropoxy triacrylate, pentaerythritol triacrylate, trimethylol propane trimethacrylate, and combinations thereof. The triacrylate reactive diluent may not be a 6-fold or higher alkoxylated glycerol triacrylate, i.e. in the case where a triacrylate reactive diluent is present in the composition, the composition contains a 9-fold or higher alkoxylated glycerol acrylate monomer as well as an additional triacrylate.

Higher acrylated monomers containing more than three acrylate groups that are suitable for use as reactive diluents in the present invention include but are not limited to (alkoxylated) pentaerythritol tetra acrylate, dipentaerythritol penta and hexa acrylate and alkoxylated versions of DPHA (dipentaerythritol hexaacrylate), e.g. EO-DPHA with degrees of alkoxylation between 4 and 24, and combinations thereof. The use of such highly acrylated monomers may lead to the formation of a highly crosslinked network on irradiation with actinic light.

The preferred reactive diluents to use in the compositions of the present invention are alkoxylated pentaerythritol tetra-acrylate or EO-DPHA with a degree of alkoxylation of between 4 and 24, with alkoxylated pentaerythritol tetra-acrylate being particularly preferred, especially ethoxylated pentaerythritol tetra-acrylate wherein the degree of ethoxylation is 5.

The reactive diluent (s) may be present in an amount of about 2-30 wt-% based on the total weight of the composition, preferably 3-20wt-% and most preferably 4-15 wt-%.

### Photoinitiator

The inventive primer, coating and ink compositions of the present invention may contain a photoinitiator or a combination of photoinitiators. The photoinitiator aids in polymerization and curing of the composition. Preferably, a photoinitiator is present in the composition. Preferably, no photoinitiator is added if EB or high energy UV-C curing applications are desired.

Exemplary photoinitiators that may be used include 1-hydroxycyclohexyl phenyl ketone, polymeric or oligomeric 2-hydroxy-2-methyl-1-[4-(1-methyl-vinyl)phenyl]propane, 2-ethylhexyl 2-([1,1'-biphenyl]-4-ylcarbonyl)benzoate, acylphosphine oxides like diphenylphosphoryl-(2,4,6-trimethylphenyl)methanone or phenyl-bis-(2,4,6-trimethylbenzoyl) phosphine oxide, 1-{4-[benzoylphenylthio]phenyl}-2-methyl-2-(4-methylphenylsulphonyl)-propan1-one), 2-hydroxy-1-[4-[4-(2-hydroxy-2-methylpropanoyl)phenoxy]phenyl]-2-methylpropan-1-one, and combinations thereof. Suitable photoinitiators include those with a remaining acrylate functionality such as Lomicure 450 of BCH, LEO10103 and LEO10101 of Allnex and combinations thereof. The compositions of the invention are not limited to the use of these photoinitiators and other known photoinitiators may be used.

The photoinitiator may be present in an amount of about 0.1-10 wt.%, preferably 0.5-4 wt.% and more preferably 0.5-2 wt.%, based on the total weight of the composition. If the application uses an inert atmosphere (e.g. in a nitrogen atmosphere or in carbon-dioxide atmosphere instead of air to overcome oxygen inhibition) to cure the ink, lower amounts of photoinitiator are suitable, such as 0.1-2.0 wt-%.

### Optional further ingredients

The energy curable ink, coating or primer composition may optionally contain a number of further ingredients in addition to those listed above (9-fold or higher alkoxylated glycerol acrylate monomer, oligomer, preferably a reactive diluent and optionally a photoinitator).

The inventive compositions may contain a sensitizer. Exemplary sensitizers that may be used include, but are not limited to, oligomeric or polymeric thioxanthone based structures e.g. Omnipol TX, Omnipol BL728 or Speedcure 7010 (IGM) or a ketocoumarin like Esacure 3644 of IGM and synergists, or aliphatic aminoacrylates such as Ebecryl 116 of Allnex or LM7401 of Sartomer or oligomeric aminobenzoates such as Omnipol 894, Omnipol ASA of IGM or Genopol AB2 of Rahn and the like. Oligomeric or polymeric thioxanthones or aliphatic aminoacrylates are preferred, if a sensitizer is present.

The inventive compositions may optionally contain a stabilizer. The stabilizer may be present in an amount of about 0.01-1.0 wt., or from about 0.02-0.1 wt.%.

The inventive compositions may contain a wetting agent, such as a defoamer and the like. A suitable wetting agent is for example BYK501, a silicone free defoamer manufactured by BYK-Chemie.

The wetting agent may be present in an amount of about 0.1-5.0 wt.%, or 0.6-2.0 wt.%, based on the total weight of the composition.

The inventive compositions may contain a colorant, such as but not limited to dyes, pigments, dispersions and the like. The dyes and pigments may be organic or inorganic. The colorants may be in powder form, granule, flush, stir-in, dispersions and the like. The colorant may be included in a dispersion containing a base further including monomers and oligomers. The colorant may be present in an amount of about 1-60 wt.%, preferably 5-45 wt.%, based on the total weight of the composition.

The inventive ink compositions may contain an acid, such as but not limited to acetic acid, phosphoric acid, sulfurous acid, methanoic acid, nitrous acid, hydrofluoric acid and combinations thereof. The preferred acid is phosphoric acid. The acid aids in water resistance and is an activator for aluminum foil or metallized substrates. The acid may be present in an amount of about 0.01-0.5 wt-%, or 0.02-0.1 wt.% based on the total weight of the ink.

As with many printing inks, other additives, alone or in combination may be employed, including but not limited to titanates, defoamers, stabilizers, silicones, plasticizers, waxes, clays, adhesion promoters or reducers, slip promoters or reducers, rub resistance promoters or reducers, water controls, release aids and the like. The additives may be present in an amount of about 0.1-3.0 wt .% based on the total weight of the end product.

### Preparation of ink, coating and primer compositions of the invention

The components of the coating, primer and ink may be mixed in any order. In one embodiment, the inventive inks may be formulated, for example, by preparing a primary vehicle first by blending oligomers, monomers, acrylates, wetting agents, stabilizers, photoinitiators, inhibitors and other additives. The oligomer may be heated prior to adding to the vehicle mixture, such as at a temperature of about 70°C to about 100°C, or about 85°C. The blending may occur in any container, such as in a conventional bow type high speed mixer. The vehicle is mixed until fully blended, for example, for about 30 minutes.

The vehicle blend is allowed to cool to about 20-30°C, or about 22°C, and gradually added to a UV base composition, while keeping temperatures controlled to less than about 25°C. The UV base may contain colorants and other monomers and oligomers and additives.

In case of UV and LED-UV-applications, a photoinitiator is added along with at least one reactive diluent and inhibitors. No photoinitiator is added if EB or high energy UV-C curing applications are desired. Any other additives may be added at this time. The mix is filtered and checked for grind, cure and shades.

### Applications of the ink, coating and primer compositions of the invention

The present invention provides the use of a 9-fold or higher alkoxylated glycerol acrylate monomer with a molecular weight higher than 500g/mol in an amount between 10-80wt-% based on the total weight of the composition in an energy curable ink, coating or primer composition suitable for retort packaging applications. The 9-fold or higher alkoxylated glycerol acrylate monomer may be any of the 9-fold or higher alkoxylated glycerol acrylate monomers disclosed above. The preferences for the nature of the 9-fold or higher alkoxylated glycerol acrylate monomer described above apply equally to use of these monomers in energy curable ink, coating or primer compositions that are suitable for retort packaging applications and to printed articles that contain one of the compositions of the invention. As explained above, the 9-fold or higher alkoxylated glycerol acrylate monomer is most preferably PO9-GPTA, thus in a most preferred embodiment, the present invention provides the use of PO9-GPTA in an amount between 10-80wt-% based on the total weight of the composition in an energy curable ink, coating or primer composition suitable for retort packaging applications.

The inventive ink compositions may be used in any application for which a UV-curable or EB-curable ink is desired. In particular, they are suitable for use on substrates such as aluminum containers, especially primed aluminum containers, foils, plastic and metallic films, plastic rubbers, papers, boards, nonwoven materials, glass, ceramic, wood, metal, molded parts, films, cloth, concrete, and the like.

The present invention thus provides aluminum containers, especially primed aluminum containers, foils, plastic and metallic films, plastic rubbers, papers, boards, nonwoven materials, glass, ceramic, wood, metal, molded parts, films, cloth and concrete onto which any of the energy curable ink, coating or primer compositions disclosed herein are printed.

The compositions of the present invention are suitable for aluminum films, plastic films and corona treated PET. The present invention thus provides aluminum films, plastic films and corona treated PET onto which any of the energy curable ink, coating or primer compositions disclosed herein are printed. The low migration, EC-curable primers, first down white inks, inks and overprint varnishes of the present invention provide acceptable tape adhesion for surface prints and good interlayer adhesion between the substrate to be printed on and the subsequent ink layers even after being exposed to retort conditions.

The compositions may be used to adhere on substrates like foils, metallized surfaces and various plastic substrates like polyethylenes, polypropylenes, polyesters, polystyrene etc. Accordingly, the present invention provides foils, metallized surfaces and plastic substrates (such as polyethylenes, polypropylenes, polyesters or polystyrene) onto which any of the energy curable ink, coating or primer compositions disclosed herein are printed.

The inventive ink may be deposited using various printing processes, including but not limited to flexographic, screen, and other known processes. Preferably, the inventive ink is printed by flexographic printing.

The inventive inks may be used on packaging substrates, and are especially useful in retort packaging, such as pet foods and other special packaging. Such retort packaging is subject to heat, water and steam exposure and must remain resistant to such exposure while being scratch resistant and still maintaining adhesion to the package substrate and maintain color strength and gloss of the printed graphic or text.

The present invention provides a retortable package, preferably a retortable food package, comprising the any of the energy curable ink, coating or primer compositions disclosed herein. The retortable package may comprise aluminium.

The compositions of the present invention comprising highly alkoxylated glycerol acrylate monomers may be used to comply with the low specific migration limits (SMLs) discussed above.

For those acrylates which are not fully tested and where no SML is available, the migration limit is 10 ppb.

The present invention provides a method of preparing a printed article comprising applying the energy curable ink, coating or primer composition disclosed herein to a substrate. Any of the energy curable ink, coating or primer compositions disclosed herein may be used in the method, and the preferences for the nature of the composition that are disclosed above also apply equally to said method.

The substrate may be selected from the group consisting of aluminum containers, especially primed aluminum containers, foils, plastic and metallic films, plastic rubbers, papers, boards, nonwoven materials, glass, ceramic, wood, metal, molded parts, films, cloth and concrete. The invention also provides a method of preparing a printed article comprising applying the energy curable ink, coating or primer composition disclosed herein to a substrate selected from foils, metallized surfaces and plastic substrates (such as polyethylenes, polypropylenes, polyesters or polystyrene). Preferably, the substrate comprises aluminum film, plastic film or corona treated PET. Most preferably, the method of the invention is used to prepare a retortable package.

In the method of preparing a printed article, the energy curable ink, coating or primer composition may be applied by any known printing method, such as flexography or screenprinting. The application of the composition by flexography is preferred.

In the method of preparing a printed article, the energy curable ink, coating or primer composition may be cured by electron beam curing or UV-C curing. When electron beam curing or UV-C curing is used, generally the composition does not contain a photoinitiator.

Other curing methods may also be used, including the use of UV-A, UV-B or LED-UV irradiation. When these methods are used, the composition generally comprises one or more photoinitiators, and optionally further comprises a sensitizer.

The present invention also provides a method of retort packaging a foodstuff, comprising providing the printed retortable package disclosed herein, which comprises a retortable package onto which the energy curable ink, coating or primer composition disclosed herein is printed, and filling the retortable package with the foodstuff. Preferably, the foodstuff is a pet food.

The method of retort packaging may further comprise sealing the retortable package and may also further comprise heating the filled retortable package to a temperature of at least 100 °C. The retortable package preferably comprises aluminium.

### Exemplary ink, coating and primer compositions, printed articles, methods and uses of the invention

In all of the following exemplary embodiments, the preferences described above for all features of the invention apply, i.e. these exemplary embodiments may each be narrowed further using the preferred definitions described above.

As described herein, the present invention provides an energy curable ink, coating or primer composition comprising:
(a) 9-fold or higher alkoxylated glycerol acrylate monomer with a molecular weight higher than 500g/mol in an amount between 10-80wt-% based on the total weight of the composition; and
(b) one or more oligomers.

The present invention also provides an energy curable ink, coating or primer composition comprising:
(a) 9-fold or higher alkoxylated glycerol acrylate monomer with a molecular weight higher than 500g/mol in an amount between 10-80wt-% based on the total weight of the composition, wherein the alkoxy groups in the alkoxylated glycerol acrylate monomer are C2-C10 alkoxy groups, preferably C2-C6 alkoxy groups; and
(b) one or more oligomers selected from the group consisting of aminoacrylates, (meth-)acrylates, polyester acrylates, urethane acrylates, polyether acrylates and combinations thereof, preferably selected from urethane acrylates, aminoacrylates or polyether acrylates, or a combination thereof.

The present invention also provides an energy curable ink, coating or primer composition comprising:
(a) 9-fold or higher alkoxylated glycerol triacrylate monomer, preferably 9 to 20-fold alkoxylated glycerol triacrylate monomer, with a molecular weight higher than 500g/mol in an amount between 10-80wt-% based on the total weight of the composition, wherein the alkoxy groups in the alkoxylated glycerol acrylate monomer are C2-C4 alkoxy groups; and
(b) one or more oligomers selected from the group consisting of aminoacrylates, (meth-)acrylates, polyester acrylates, urethane acrylates, polyether acrylates and combinations thereof, preferably selected from urethane acrylates, aminoacrylates or polyether acrylates, or a combination thereof.

The present invention also provides an energy curable ink, coating or primer composition comprising:
(a) 9-fold or higher alkoxylated glycerol acrylate monomer, preferably 9 to 20-fold alkoxylated glycerol acrylate monomer, with a molecular weight higher than 500g/mol in an amount between 10-80wt-% based on the total weight of the composition; and
(b) one or more oligomers selected from the group consisting of aminoacrylates, (meth-)acrylates, polyester acrylates, urethane acrylates, polyether acrylates and combinations thereof, preferably selected from urethane acrylates, aminoacrylates or polyether acrylates, or a combination thereof, wherein the oligomers are present in a total amount of 5-60 wt.-%, preferably 10-40 wt.-%, based on the total weight of the composition.

The present invention also provides an energy curable ink, coating or primer composition comprising:
(a) 9-fold or higher alkoxylated glycerol triacrylate monomer, preferably 9 to 20-fold alkoxylated glycerol triacrylate monomer, more preferably 9 to 15-fold alkoxylated glycerol triacrylate monomer, with a molecular weight higher than 500g/mol in an amount between 10-80wt-% based on the total weight of the composition, wherein the alkoxy groups in the alkoxylated glycerol triacrylate monomer are C2-C10 alkoxy groups, preferably C2-C6 alkoxy groups; and
(b) one or more oligomers selected from the group consisting of aminoacrylates, (meth-)acrylates, polyester acrylates, urethane acrylates, polyether acrylates and combinations thereof, preferably selected from urethane acrylates, aminoacrylates or polyether acrylates, or a combination thereof, wherein the oligomers are present in a total amount of 5-60 wt.-%, preferably 10-40 wt.-%, based on the total weight of the composition.

The present invention also provides an energy curable ink, coating or primer composition comprising:
(a) 9-fold or higher propoxylated glycerol triacrylate monomer, preferably 9 to 20-fold propoxylated glycerol triacrylate monomer, more preferably 9 to 15-fold propoxylated glycerol triacrylate monomer, with a molecular weight higher than 500g/mol in an amount between 10-80wt-% based on the total weight of the composition; and
(b) one or more oligomers selected from the group consisting of aminoacrylates, (meth-)acrylates, polyester acrylates, urethane acrylates, polyether acrylates and combinations thereof, preferably selected from urethane acrylates, aminoacrylates or polyether acrylates, or a combination thereof, wherein the oligomers are present in a total amount of 5-60 wt.-%, preferably 10-40 wt.-%, based on the total weight of the composition.

The present invention also provides an energy curable ink, coating or primer composition comprising:
(a) PO9-GPTA in an amount between 10-80wt-% based on the total weight of the composition; and
(b) one or more oligomers selected from the group consisting of aminoacrylates, (meth-)acrylates, polyester acrylates, urethane acrylates, polyether acrylates and combinations thereof, preferably selected from urethane acrylates, aminoacrylates or polyether acrylates, or a combination thereof, wherein the oligomers are present in a total amount of 5-60 wt.-%, preferably 10-40 wt.-%, based on the total weight of the composition.

The present invention also provides an energy curable ink, coating or primer composition comprising:
(a) 9-fold or higher alkoxylated glycerol acrylate monomer with a molecular weight higher than 500g/mol in an amount between 10-80wt-% based on the total weight of the composition, wherein the alkoxy groups in the alkoxylated glycerol acrylate monomer are C2-C6 alkoxy groups, preferably C2-C4 alkoxy groups;
(b) one or more oligomers selected from the group consisting of aminoacrylates, (meth-)acrylates, polyester acrylates, urethane acrylates, polyether acrylates and combinations thereof, preferably selected from urethane acrylates, aminoacrylates or polyether acrylates, or a combination thereof; and
(c) one or more reactive diluents that are not 6-fold or higher alkoxylated glycerol acrylate monomers, wherein the one or more reactive diluents are selected from the group consisting of diacrylates, triacrylates and higher acrylated monomers containing more than three acrylate groups, preferably higher acrylated monomers containing more than three acrylate groups.

The one or more reactive diluents are preferably present in an amount of 2-30 wt-%, more preferably 4-15 wt-%, based on the total weight of the composition.

The one or more oligomers are preferably present in a total amount of about 5-60 wt.-%, preferably 10-40 wt.-%, based on the total weight of the composition.

The present invention also provides an energy curable ink, coating or primer composition comprising:
(a) 9-fold or higher propoxylated glycerol triacrylate monomer, preferably 9 to 20-fold propoxylated glycerol triacrylate monomer, more preferably 9 to 15-fold propoxylated glycerol triacrylate monomer, with a molecular weight higher than 500g/mol in an amount between 10-80wt-% based on the total weight of the composition;
(b) one or more oligomers selected from the group consisting of aminoacrylates, (meth-)acrylates, polyester acrylates, urethane acrylates, polyether acrylates and combinations thereof, preferably selected from urethane acrylates, aminoacrylates or polyether acrylates, or a combination thereof, wherein the one or more oligomers are present in a total amount of 5-60 wt.-%, preferably 10-40 wt.-%, based on the total weight of the composition; and
(c) one or more reactive diluents that are not 6-fold or higher alkoxylated glycerol acrylate monomers, wherein the one or more reactive diluents are higher acrylated monomers containing more than three acrylate groups, preferably alkoxylated pentaerythritol tetra acrylate, wherein the one or more reactive diluents are preferably present in an amount of 2-30 wt-%, more preferably 4-15 wt-%, based on the total weight of the composition.

The present invention also provides an energy curable ink, coating or primer composition comprising:
(a) 9-fold or higher alkoxylated glycerol triacrylate monomer, preferably 9 to 20-fold alkoxylated glycerol triacrylate monomer, more preferably 9 to 15-fold alkoxylated glycerol triacrylate monomer, with a molecular weight higher than 500g/mol in an amount between 10-80wt-% based on the total weight of the composition, wherein the alkoxy groups in the alkoxylated glycerol triacrylate monomer are C2-C10 alkoxy groups, preferably C2-C6 alkoxy groups;
(b) one or more oligomers selected from the group consisting of aminoacrylates, (meth-)acrylates, polyester acrylates, urethane acrylates, polyether acrylates and combinations thereof, preferably selected from urethane acrylates, aminoacrylates or polyether acrylates, or a combination thereof; and
(c) one or more reactive diluents that are not 6-fold or higher alkoxylated glycerol acrylate monomers, wherein the one or more reactive diluents are selected from the group consisting of diacrylates, triacrylates and higher acrylated monomers containing more than three acrylate groups, preferably higher acrylated monomers containing more than three acrylate groups.

The one or more reactive diluents are preferably present in an amount of 2-30 wt-%, more preferably 4-15 wt-%, based on the total weight of the composition.

The one or more oligomers are preferably present in a total amount of 5-60 wt.-%, preferably 10-40 wt.-%, based on the total weight of the composition.

The present invention also provides an energy curable ink, coating or primer composition comprising:
(a) PO9-GPTA in an amount between 10-80wt-% based on the total weight of the composition;
(b) one or more oligomers selected from the group consisting of aminoacrylates, (meth-)acrylates, polyester acrylates, urethane acrylates, polyether acrylates and combinations thereof, preferably selected from urethane acrylates, aminoacrylates or polyether acrylates, or a combination thereof; and
(c) one or more reactive diluents that are not 6-fold or higher alkoxylated glycerol acrylate monomers, wherein the one or more reactive diluents are selected from the group consisting of diacrylates, triacrylates and higher acrylated monomers containing more than three acrylate groups, preferably higher acrylated monomers containing more than three acrylate groups.

The one or more reactive diluents are preferably present in an amount of 2-30 wt-%, more preferably 4-15 wt-%, based on the total weight of the composition.

The one or more oligomers are preferably present in a total amount of 5-60 wt.-%, preferably 10-40 wt.-%, based on the total weight of the composition.

The present invention also provides an energy curable ink, coating or primer composition comprising:
(a) 9-fold or higher alkoxylated glycerol triacrylate monomer, preferably 9 to 20-fold alkoxylated glycerol triacrylate monomer, with a molecular weight higher than 500g/mol in an amount between 10-80wt-% based on the total weight of the composition, wherein 9-fold or higher alkoxylated glycerol triacrylate monomer is preferably PO9-GPTA;
(b) one or more oligomers selected from the group consisting of urethane acrylates, aminoacrylates or polyether acrylates, or a combination thereof; and
(c) one or more reactive diluents that are not 6-fold or higher alkoxylated glycerol acrylate monomers, wherein the one or more reactive diluents are higher acrylated monomers containing more than three acrylate groups.

The one or more reactive diluents are preferably present in an amount of 2-30 wt-%, more preferably 4-15 wt-%, based on the total weight of the composition.

The one or more oligomers are preferably present in a total amount of 5-60 wt.-%, preferably 10-40 wt.-%, based on the total weight of the composition.

The present invention also provides an energy curable ink, coating or primer composition comprising:
(a) PO9-GPTA in an amount between 10-80wt-% based on the total weight of the composition;
(b) one or more oligomers selected from the group consisting of urethane acrylates, aminoacrylates or polyether acrylates, or a combination thereof, in a total amount of 5-60 wt.-%, preferably 10-40 wt.-%, based on the total weight of the composition; and
(c) one or more reactive diluents that are not 6-fold or higher alkoxylated glycerol acrylate monomers, wherein the one or more reactive diluents are higher acrylated monomers containing more than three acrylate groups, preferably alkoxylated pentaerythritol tetra acrylate, wherein the one or more reactive diluents are present in an amount of 2-30 wt-%, preferably 4-15 wt-%, based on the total weight of the composition.

The present invention also provides an energy curable ink, coating or primer composition comprising:
(a) PO9-GPTA in an amount between 20-70wt-% based on the total weight of the composition;
(b) one or more oligomers selected from the group consisting of urethane acrylates, aminoacrylates or polyether acrylates, or a combination thereof, in a total amount of 10-40 wt.-%, based on the total weight of the composition; and
(c) one or more reactive diluents that are not 6-fold or higher alkoxylated glycerol acrylate monomers, wherein the one or more reactive diluents are higher acrylated monomers containing more than three acrylate groups, preferably alkoxylated pentaerythritol tetra acrylate, wherein the one or more reactive diluents are present in an amount of 4-15 wt-%, based on the total weight of the composition.

The present invention also provides a printed article comprising any of the energy curable ink, coating or primer compositions described above in this section. Preferably, the article is a retortable package.

The present invention also provides the use of any of the alkoxylated glycerol acrylate monomers described above in this section with a molecular weight higher than 500g/mol in an amount between 10-80wt-% based on the total weight of the composition in an ink, coating or primer composition suitable for retort packaging applications.

The present invention also provides a method of preparing a printed article comprising applying any of the energy curable ink, coating or primer compositions described above in this section to a substrate.

The present invention also provides a method of retort packaging a foodstuff, comprising providing a printed retortable package formed by applying any of the energy curable ink, coating or primer compositions described above in this section, and filling the retortable package with the foodstuff.

The composition may not contain a photoinitiator.

The composition may further comprise a sensitizer selected from the group consisting of oligomeric or polymeric thioxanthone based structures; a ketocoumarin; aliphatic aminoacrylates; and oligomeric aminobenzoates.

The composition may be suitable for printing by either flexography or screenprinting.

The composition may be suitable for printing by flexography.

The present invention provides a printed article comprising the composition described herein, wherein the printed article is preferably a retortable food package.

The printed article may be selected from foils, plastic films, preferably corona treated PET, aluminum containers, preferably primed aluminum containers, and metallic films.

The printed article may comprise a substrate comprising aluminium, onto which substrate the ink, coating or primer composition is printed.

A method of preparing a printed article comprising applying the energy curable ink, coating or primer composition of the invention to a substrate is provided.

The method may involve applying the composition by flexography.

The method may involve curing the composition by electron beam curing or UV-C curing.

The method may involve curing a composition that comprises a photoinitiator by UV-A, UV-B or LED-UV irradiation.

A method of retort packaging a foodstuff is provided , comprising providing the printed retortable package described above and filling the retortable package with the foodstuff.

The method may further comprise sealing the retortable package.

The method may further comprise heating the filled retortable package to a temperature of at least 100 °C.

The foodstuff may be a pet food.

The retortable package may comprise aluminium.

### EXAMPLES

The invention is further described by the following non-limiting examples which further illustrate the invention, and are not intended, nor should they be interpreted to, limit the scope of the invention.

### Abbreviations of chemicals in Tables 1-3

### GPTA: Propoxylated Glycerol Triacrylate:

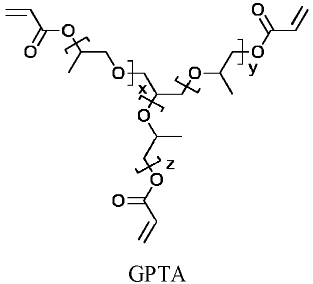

PO9GPTA or PO9-GPTA refers to the above GPTA structure if on average the degree of propoxylation x+y+z is about 9.

### TMPTA: Trimethylolpropane triacrylate:

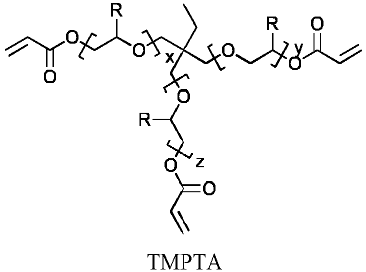

If R = H, the TMPTA is ethoxylated (EO(x+y+z)-TMPTA).

If R = CH₃, the TMPTA is propoxylated (PO(x+y+z) TMPTA).

PO6TMPTA refers to the above TMPTA structure if x+y+z is on average about 6 on the trimethylolpropane triacrylate and R = CH₃.
PPTTA: alkoxylated pentaerythritol tetra-acrylate e.g. Laromer PPTTA of BASF (degree of ethoxylation 5)

### EO-DPHA: ethoxylated dipentaerythritol hexaacrylate

### Example compositions

Inventive (Inv) and Comparative (Comp) ink, primer and coating compositions of the invention were formulated according to the subsequent tables.

**Table 1 - Formulations of Flexographic Cyan UV Ink Compositions**

| Material | Ex. 1 (Comp) | Ex. 2 (Comp) | Ex. 3 (Comp) | Ex. 4 (Comp) | Ex. 5 (Inv) | Ex. 6 (Inv) |
|---|---|---|---|---|---|---|
| (EO)9-TMPTA | 10.2 | | | | | |
| PO6-TMPTA | | 28.6 | | | | |
| PO3-TMPTA | | | 28.6 | | | |
| PO3-GPTA | | | | 28.6 | | |
| PO9GPTA | | | | | 28.6 | 32 |
| PPTTA | 9.3 | 8 | 8 | 8 | 8 | |
| EO-DPHA | 15 | | | | | |
| 1-{4-[benzoylphenylthio]phenyl}-2-methyl-2-(4-methylphenylsulphonyl)-propan1-one) | 1.5 | | | | | |
| Phenyl-bis-(2,4,6-trimethylbenzoyl) phosphine oxide | 1 | 1 | 1 | 1 | 1 | 2 |
| Polymeric or oligomeric thioxanthone | | 2 | 2 | 2 | 2 | 5 |
| Aliphatic aminoacrylate | 12 | 15 | 15 | 15 | 15 | 15 |
| Aliphatic Urethane Acrylate(s) | 15 | 10 | 10 | 10 | 10 | 10 |
| Additives (wetting additive, anti-foaming, stabilizer) | 1 | 0.4 | 0.4 | 0.4 | 0.4 | 1 |
| Cyan base with pigment blue 15:4 | 35 | 35 | 35 | 35 | 35 | 35 |
| Total | 100 | 100 | 100 | 100 | 100 | 100 |

The inks in Table 1 were prepared by using a vehicle and a pigment base which were mixed to form the final ink. The inks were prepared by formulating a primary vehicle by blending oligomers, monomers (mostly acrylates) and wetting agents in conventional bow type high speed mixers for about 30 minutes. This blend was allowed to cool to 22°C and gradually added to a UV base composition containing further oligomers and monomers, while keeping temperatures controlled to less than 25°C.

Finally, photoinitiators were added optionally along with a reactive diluent and inhibitors and other additives. The mixes were filtered and checked for grind, cure and shades. Grind was tested using a NPIRI grind gauge. Each sample had a grind of ≤ 7 microns.

The comparative and inventive examples in Table 1 are based on similar compositions, differing primarily in the presence of the various propoxylated TMPTAs and PO3-GPTA vs. PO9-GPTA. Comparative Example 1 has a high degree of ethoxylation by using EO9-TMPTA and EO-DPHA.

Preparation of UV Flexo Coatings (Overprint Varnishes, OPV) for energy curable heat and water-resistant coatings. All weight percentages indicated below are expressed in terms of percentages of the final weight percentage of the vehicle.

**Table 2 - Formulations of UV coating compositions for retort conditions**

| | Ex. 7 (Comp) | Ex. 8 (Comp) | Ex. 9 (Comp) | Ex. 10 (Comp) | Ex. 11 (Comp) | Ex. 12 (Inv) | Ex. 13 (Inv) |
|---|---|---|---|---|---|---|---|
| (EO)9-TMPTA | 32 | 47 | | | | | |
| PO6-TMPTA | | | 53.8 | | | | |
| PO3-TMPTA | | | | 53.8 | | | |
| PO3-GPTA | | | | | 53.8 | | |
| PO9-GPTA | | | | | | 53.8 | 62 |
| PPTTA | 10 | 10 | 12 | 12 | 12 | 12 | 10 |
| EO-DPHA | 15 | | | | | | |
| Splitting Type PI, e.g. 2-hydroxy-1-[4-[4-(2-hydroxy-2-methylpropanoyl)phenoxy]phenyl] -2-methylpropan-1-one | 1 | 1 | 1 | 1 | 1 | 1 | 1 |
| Aliphatic aminoacrylate | 15 | 15 | 15 | 15 | 15 | 15 | 15 |
| Aliphatic Urethane Acrylate(s) | 25 | 25 | 15 | 15 | 15 | 15 | 10 |
| Additives (wetting additive, anti-foaming, stabilizer) | 2 | 2 | 2.2 | 2.2 | 2.2 | 2.2 | 2.0 |
| Total | 100 | 100 | 100 | 100 | 100 | 100 | 100 |

Comparative Examples 7 & 8 show a high degree of ethoxylation by using EO9-TMPTA and/or EO-DPHA. Inventive Examples 12 and 13 with PO9GPTA show a similar high degree of propoxylation.

To have a direct comparison, Comparative Example 9 (PO6-TMPTA), Comparative Example 10 (PO3-TMPTA) and Comparative Example 11 (PO3-GPTA) were formulated in the same way as Inventive Example 12 (PO9GPTA). These examples were used to test the retort and migration conditions of a stack and the results are reported in Table 4 below.

**Table 3: Formulations of white UV ink compositions**

| | Ex. 14 (Comp) | Ex. 15 (Comp) | Ex. 16 (Comp) | Ex. 17 (Comp) | Ex. 18 (Comp) | Ex. 19 (Inv) |
|---|---|---|---|---|---|---|
| (EO)9-TMPTA | 19.2 | 35.2 | | | | |
| PO9GPTA | | | | | | 35.5 |
| PO3TMPTA | | | | 35.5 | | |
| PO3GPTA | | | | | 35.5 | |
| PO6TMPTA | | | 35.5 | | | |
| PPTTA | | | 5 | 5 | 5 | 5 |
| EO-DPHA | 16 | | | | | |
| Difunctional acrylate Monomer (tricyclodecane dimethanol diacrylate) | 6 | 6 | | | | |
| Phenyl-bis-(2,4,6-trimethylbenzoyl) phosphine oxide | 1 | 1 | 2 | 2 | 2 | 2 |
| Tetrafunctional Polyether acrylate | 14.8 | 14.8 | 15 | 15 | 15 | 15 |
| Additives (Dispersants, Stabilizer) | 3 | 3 | 2.5 | 2.5 | 2.5 | 2.5 |
| TiO₂ Pigment | 40 | 40 | 40 | 40 | 40 | 40 |
| Total | 100 | 100 | 100 | 100 | 100 | 100 |

Table 3 shows different compositions for UV flexo white inks.

A direct comparison with the same formulations is given between the comparative white inks based on PO6-TMPTA (comparative example 16), PO3-TMPTA (comparative example 17) and PO3-GPTA (comparative example 18), relative to PO9-GPTA (inventive example 19).

It is also possible to compare comparative Examples 14 & 15 vs. Inventive Example 19.

Comparative Examples 14 & 15 are both based on EO9-TMPTA; Comparative Example 14 additionally contains EO-DPHA. In order to improve adhesion, a tricyclodecane dimethanol diacrylate in an amount of 6 wt-% was used in both Examples 14 & 15. However, Comparative Examples 14 & 15 did not pass the tests after being applied under retort conditions. In contrast to Inventive Example 19, the ink layer of Comparative Examples 14 & 15 easily detaches from the substrate.

### Migration testing of example compositions

Testing was performed on "stacks" printed on a primed substrate. The white inks were applied as a first down white in a "stack" where the white is printed as a first down white (FDW) on a primed aluminium substrate; then cyan ink is printed over the top of the FDW which is then coated by the overprint varnish. Migration is determined for the whole stack, not just for each single layer printed in the stack.

In order to test for an unexpected beneficial effect of the PO9-GPTA versus the PO3-TMPTA, PO6-TMPTA and PO3-GPTA stacks were printed with the formulations given above where in each case the FDW containing one of these propoxylated acrylates was printed with the cyan ink and the OPV containing the same propoxylated acrylate. Therefore, in migration, the selected propoxylated acrylate is more likely to show up than in a stack where different acrylates are used and of course much more likely than in a migration test where just one layer of e.g. just the ink or just the FDW or just the OPV is tested for migration. In the PO9-GPTA stack, the FDW layer is formed by the white ink of example 19, the cyan ink layer is formed by the cyan ink of example 5 and the OPV layer is formed using the formulation of example 12.

The rint method (used for migration testing as well as gloss and adhesion testing) was as follows. A print was prepared on aluminum substrate with a full coverage of ink (white, cyan, OPV) each applied by a volume of 1.2cm³/m². The print was cured with a UV-dose of 2 x 50mJ/cm² (measured with Power Puck II, sum of UV-A, B and C irradiance - not UV-V) and the resultant substrate with the three layers was subjected to a targeted analysis for migratables in the print.

Migration analysis was performed using the set-off migration test as described below in the test methods section on 3-layer laminate stacks (white, cyan, OPV). The conditions for the migration were 40°C for 10 days.

**Table 4: Migration results of the targeted analysis for the propoxylated tri-acrylates printed in 3-layer stacks as described above (ppb, µg/kg, EU model)**

| Tri-acrylate | CAS # | a) SML or b) hazard assessed SML | Stack made of PO9-GPTA containing materials | Stack made of PO6-TMPTA containing materials | Stack made of PO3-TMPTA containing materials | Stack made of PO3-GPTA containing materials |
|---|---|---|---|---|---|---|
| PO3-GPTA | 52408-84-1 | a) 50 | ND | <10 | ND | 230 |
| PO9-GPTA | 52408-84-1 | a) 50 | <10 | ND | ND | ND |
| PO3TMPTA | 53879-54-2 | b) 50 | ND | ND | 612 | ND |
| PO6TMPTA | 53879-54-2 | b) 50 | ND | 54 | ND | ND |

| | | | | | | |
|---|---|---|---|---|---|---|
| ND = Not detected (a response signal to noise of less than 3:1) | | | | | | |

Table 4 clearly shows that amongst the materials tested, only the stacks made from the compositions containing PO9-GPTA passed the migration test. Surprisingly, only the stack with the prints where PO9-GPTA was used in the formulation passed the migration test, whereas all other propoxylated materials showed levels higher than 50ppb which is the specific migration limit for these substances according to the Swiss Ink Ordinance. It was unexpected that the PO9-GPTA would have such a beneficial effect on UV-cure of the prints.

Furthermore, the GPTA, despite the fact that it is a triacrylate like TMPTA, showed migration to a lesser extent than the TMPTA.

One may surmise that the level of migration is lower when going from PO3 to PO9-GPTA because the molecular weight of a PO9GPTA is higher than for a PO3GPTA. However, there is also a dilution effect of the additional PO-units resulting in a lower amount of acrylate functionality per gram and therefore in less crosslinking. Therefore, it was not obvious that the use of PO9-GPTA would result in a retortable and compliant ink structure, especially as the PO(6)-TMPTA showed up levels of migration which are not compliant (higher than 50ppb) in the shown one to one comparison.

### Retort and Adhesion Testing of example compositions

The colored inks and coatings of the invention were formulated as above and tested as set forth below.

Stacks were printed on primed aluminum foil stock with industry standard optical density using the basic process described above. The inventive heat resistant and water-resistant ink, primer and coating compositions were applied by a flexographic method with different anilox rollers (cell volumes) on an primed aluminum foil substrate and passed through UV lamps of 200 wpi at 250m·min⁻¹.

The stacks had good performance properties such as improved resistance to heat and water while exhibiting no loss in color strength or gloss, as well as having improved adhesion and scratch resistance.

The inventive compositions were checked for gloss (50-80%) by a micro-Tri-gloss from BYK-Gardner. All comparative and inventive formulations were in spec/passed the test.

Adhesion was tested via a standard tape test (Tesa 4104) and scratch resistance. The inventive compositions were tested after 3 to 7 days in a retort chamber at a temperature of about 145°C for about 45 minutes. Results are given in table 5 below.

The retorted product printed with the inventive compositions, after cooling and drying, passed the above tests. The tests were conducted on primed aluminum foil (corona treatment) and the results were good, meaning the inventive compositions exhibited adhesion due to activated substrate surfaces and an accelerated cure under a controlled UV spectrum to be able to achieve instant adhesion and other desired properties for retortable aluminum containers.

**Table 5: Tape adhesion and Heat-sealing resistance before and after retort of the different stacks.**

| | | Inventive (PO)9GPTA | Comp. (PO)3GPTA | Comp. (PO)3TMPTA | Comp. (PO)6TMPTA |
|---|---|---|---|---|---|
| Before retort | | | | | |
| Tape adhesion | | 5 | 5 | 5 | 5 |
| Heat-sealing resistance | 260°C | Pass | Pass | Pass | Pass |
| | 280°C | Pass | Pass | Pass | pass |
| | 300°C | Pass | Pass | Pass | Pass |
| | 320°C | Pass | Pass | Pass | Pass |
| | 340°C | Pass | Pass | Pass | Pass |
| | 350°C | Pass | pass | pass | Pass |

| After retort (129°C, 45 min) | | | | | |
|---|---|---|---|---|---|
| Scratch test (visual) | | Pass | Fail | Fail | Pass |
| Scratch test (microscope) | | Pass | Fail | Fail | Fail |

Table 5 shows all three comparative stacks (based on either PO3-GPTA, PO3-TMPTA PO6-TMPTA) as well as the stack where the inventive inks and coatings based on PO9-GPTA were used all passed tape adhesion and heat-sealing resistance (260, 280, 300, 320, 340 and 350°C) tests before retort. After retort (129°C, 45 min), by visual inspection (naked eye), some cracks are easily observed in the stacks where PO3-GPTA and PO3-TMPTA is used. Some cracks are observed in the stack where the PO6-TMPTA if a microscope at 50X is used for the inspection. Many cracks are detected in the case of PO3GPTA and PO3-TMPTA. In contrast, the stack where the inventive PO9-GPTA is used for the inks and the OPV, no cracks are visible even under microscope inspection. This again shows how the PO9-GPTA is beneficial for the intended application in comparison to the other propoxylated tri-acrylates.

All inventive formulations were tested as indicated above and passed the retortability, gloss and adhesion tests.

Moreover, the inventive samples were pin embossed 37 to 47µm on aluminum and die cut before the retort step to convert them to a lid and all meet the necessary requisites of conversion by preserving the edges while the print surfaces had good flexural strength.

Whereas Comparative Examples 14 & 15 failed in the retort process (loss of adhesion), Inventive Example 19 passed the retort process without issues.

Whereas the Comparative Cyan Examples failed the retort process (loss of adhesion) the Inventive Example 5 Cyan Ink 1 based on the highly alkoxylated GPTA passed the retort process without issues.

### Testing of gold EB-inks containing PO9-GPTA or EO9-TMPTA

In Table 6 a formulation for an ink with color shade "gold" is given. Both Comparative Example 20 based solely on EO9-TMPTA as well as Inventive Example 21 based on PO9GPTA are printed with the same optical density on the same aluminum substrate and are both overcoated with a standard (non-inventive) EB-curable OPV. The composition of the non-inventive OPV is given in the table below.

**Table 6: Gold EB-Inks with EO9-TMPTA vs PO9-GPTA**

| | Ex. 20 (Comp) | Ex. 21 (Inv) | Std (non-inventive) EB OPV |
|---|---|---|---|
| EO9-TMPTA | 62.3 | 8.80 | 32.7 |
| PO9-GPTA | | 54.00 | |
| Laromer PPTTA | 10 | 5.00 | 10.5 |
| EO-DPHA | | | 15 |
| Additives (Stabilizer, Defoamer, Dispersant) | 1.5 | 1.00 | 1.8 |
| Polyether acrylate | 10 | 15.00 | 15 |
| Aliphatic urethane acrylate | 10 | 10.00 | 25 |
| Pigment Preparation (Yellow and Red = ~4:2) | 6.2 | 6.20 | |
| Total | 100 | 100 | 100 |

The Std EB-curable OPV shown in Table 6 was applied over each of the Example 20 & 21 EB inks.

The inks were printed using a commercial flexo press on aluminum foil (60µm) containing a first layer of 2k solvent-based primer. The ink was applied in one printing unit with anilox 420 lines/cm, 5.5cm³/m² at 25°C and overprinted with the OPV using an anilox 100 L/cm, 14m³/m², 45°C. Ink and OPV was cured at 110 kV, 30 kGy, 200 ppm O₂ in one step.

Migration results were obtained for both Example 20 and 21 overprinted with Std EB OPV and both passed the migration test (Table 7). Migration was analysed using the set-off migration test described in the test methods section below.

Both overcoated inks passed the migration test, but the EO9-TMPTA based ink did not pass the retort test, whereas the inventive ink containing PO9-GPTA passed the retort test.

**Table 7: Migration Data Results of targeted analysis (ppb, µg/kg, EU-Model)**

| Acrylate | CAS # | SML | Printed Substrate Ex 20 | Printed Substrate Ex 21 |
|---|---|---|---|---|
| EO9-TMPTA | 28961-43-5 | 50 | <10 | <10 |
| EO6-TMPTA | 28961-43-5 | 50 | <10 | <10 |
| EO3-TMPTA | 28961-43-5 | 50 | <10 | <10 |
| TMPTA | 15625-89-5 | 50 | ND | ND |
| Di-TMPTA | 94108-97-1 | 10 | ND | ND |
| GPTA | 52408-84-1 | 50 | ND | ND |
| PO9-GPTA | 52408-84-1 | 50 | ND | <10 |

| | | | | |
|---|---|---|---|---|
| ND = Not detected (a response signal to noise of less than 3:1) | | | | |

However, whereas Comparative Example 20 failed in the retort process (loss of adhesion), Inventive Example 21 (based on the highly alkoxylated GPTA) passed the retort process without issues (Table 8).

**Table 8: Tape adhesion and Heat-sealing resistance before and after retort of Example 20 & 21 inks.**

| | | Comp. Ex. 20 | Inventive Ex. 21 |
|---|---|---|---|
| before retort | | | |
| Tape adhesion | | 5 | 5 |
| Scratch test | | Pass | Pass |
| Bend test (180° bend and then scratch) | | Pass | Pass |
| Heat-sealing resistance | 260°C | Pass | Pass |
| | 280°C | Pass | Pass |
| | 300°C | Pass | Pass |
| | 320°C | Pass | Pass |
| | 340°C | Pass | Pass |
| | 350°C | pass | Pass |

| After retort (134°C, 30 min) | | | |
|---|---|---|---|
| Tape adhesion test, Type 4104 | | 2 | 5 |
| Scratch test | | Pass | Pass |
| Bend test (180° bend and then scratch) | | Fail | Pass |

### TEST METHODS

### Set-off migration testing

Set-off migration testing was performed as follows:
Before the migration test, samples were conditioned 10 days at 40°C under pressure (1kg/dm²) to simulate the set-off migration in 'real' applications. This is done in accordance with Merkblatt 104/2010 of IVLV (Industrievereinigung für Lebensmitteltechnologie und Verpackung e.V.).

After conditioning, prints, 100 cm² were placed in a migration cell with the unprinted side facing into the cell. A cell blank was also set up to ensure that no contaminants were introduced during cell construction or sample workup. The cells were then filled with 100 ml of ethanol, sealed and stored for 10 days at 40°C.

After 10 days, the ethanol was removed from the cells and a 1 ml aliquot was taken for analysis by HPLC-UV-MS (IM373). The remaining ethanol was then concentrated to 1 ml using an automatic evaporator and the resulting concentrate analyzed by GC-IMS (IM304).

Evaporative recoveries and sample spiking were used to ensure correct application of the migration test protocol. Each sample was also tested in duplicate for reproducibility purposes.

The GC-MS analysis was both specific (targeted at specific analytes) and general (any migrants, in addition to those targeted, seen in the full scan migration data).

### Heat-Sealing Resistance

Equipment is Brugger HSG-CC, 440N, 1 sec sealing time.

The heat-seal tool at the top of the instrument raises the temperature from 260 - 350°C; the tool below remains at 80°C.

Prints are evaluated on the basis of whether the ink is removed or changes color. If any ink is removed the test is rated as a fail. Also, if there is a change in color shade which is noticeable by visual inspection (e.g. if a magenta visually turns more yellow) this indicates that the ink is not stable and the test is rated as a fail. If color shade remains unchanged according to visual inspection and no ink is removed, it is rated as a pass.

### Retort Test

A steam pressure vessel for steam temperatures up to 180°C is used.

Procedure: The complete lid of the container with retortable inks and coating is put in the pressure vessel. The vessel is filled with ~2 liters of water and heated until it starts boiling. The printed sample is immersed into buffered water (phosphate/acetate buffer for pH = 8) and the pressure vessel was covered and heated until it reached a temperature as shown in the tables. The heating was continued for 45 minutes at a high temperature steam. Then, the water was allowed to cool and the sample was taken out and wiped dry.

### Tape Adhesion Test

Adhesion was checked with Tesa 4104 tape as follows: A strip of tape was placed across the print and immediately peeled off. To pass the test, the tape should not rupture the inks or should pull off without exhibiting ink removal to meet the retortability criteria. Evaluation is graded on a 1-5 scale, where 5 is best and 1 is poor, i.e. 5 = No removal of ink film; 4 = slight ink film removal; 3 = moderate ink film removal; 2 = severe ink film removal; 1 = complete ink film removal. A rating of 4 or 5 is considered a pass; 3 or lower is a fail.

### Scratch test

A print sample was laid print side up on a hard surface, and the back of the index fingernail was scratched across the surface. The print was evaluated for visual scratches using a pass fail/basis with pass referring to no visual scratches and fail referring to the presence of visual scratches.

The invention has been described in terms of various embodiments thereof. but is more broadly applicable as will be understood by those skilled in the art. It will be appreciated that those skilled in the art, upon consideration of the present disclosure, may make modifications and/or improvements on this invention that fall within the scope of the invention. The scope of the invention is only limited by the following claims.

## Claims

1. An energy curable ink, coating or primer composition comprising:
(a) 9-fold or higher alkoxylated glycerol acrylate monomer with a molecular weight higher than 500g/mol in an amount between 10-80 wt-% based on the total weight of the composition; and
(b) one or more oligomers.

2. The composition of claim 1, wherein the composition further comprises one or more reactive diluents that are not 6-fold or higher alkoxylated glycerol acrylate monomers, wherein the reactive diluents are selected from the group consisting of diacrylates, triacrylates and higher acrylated monomers containing more than three acrylate groups, preferably higher acrylated monomers containing more than three acrylate groups;
preferably wherein the reactive diluent is present in an amount of 2-30 wt-%, more preferably 3-20 wt-%, most preferably 4-15 wt-%, based on the total weight of the composition.

3. The composition of claim 2, wherein the one or more reactive diluents are selected from the group consisting of dipropylene glycol diacrylate, tripropylene glycol diacrylate, butanediol diacrylate, hexanediol diacrylate, trimethylol propane triacrylate, ethoxylated trimethylol propane triacrylate, glycerolpropoxy triacrylate, pentaerythritol triacrylate, dipropylene glycol dimethacrylate, tripropylene glycol dimethacrylate, butanediol dimethacrylate, hexanediol dimethacrylate, trimethylol propane trimethacrylate, (alkoxylated) pentaerythritol tetra acrylate, dipentaerythritol penta and hexa acrylate and alkoxylated versions of DPHA, such as EO-DPHA with degrees of alkoxylation between 4 and 24, and combinations thereof;
preferably wherein the reactive diluent is alkoxylated pentaerythritol tetra acrylate.

4. The composition of any preceding claim, wherein the glycerol acrylate monomer is 9 to 20 fold-alkoxylated, preferably 9 to 15-fold alkoxylated.

5. The composition of any preceding claim, wherein the alkoxylated glycerol acrylate monomer is an alkoxylated glycerol triacrylate, preferably a 9 to 20 fold-alkoxylated glycerol triacrylate, more preferably a 9 to 15 fold-alkoxylated glycerol triacrylate.

6. The composition of any preceding claim, wherein the alkoxy groups in the alkoxylated glycerol acrylate monomer are C2-C10 alkoxy groups, preferably C2-C6 alkoxy groups, more preferably C2-C4 alkoxy groups, most preferably propoxy groups.

7. The composition of any preceding claim, wherein the glycerol acrylate monomer is a propoxylated glycerol triacrylate, preferably PO9-GPTA.

8. The composition of any one of claims 1-7, wherein the molecular weight of the alkoxylated glycerol acrylate monomer is higher than 750 g/mol.

9. The composition of any preceding claim, wherein the one or more oligomers are selected from the group consisting of aminoacrylates, (meth-)acrylates, polyester acrylates, urethane acrylates, polyether acrylates and combinations thereof; preferably wherein the one or more oligomers are selected from urethane acrylates, aminoacrylates or polyether acrylates, or a combination thereof; preferably wherein the oligomers are present in a total amount of 5-60 wt.-%, preferably 10-40 wt.-%, based on the total weight of the composition.

10. The composition of any preceding claim, wherein the composition comprises a urethane acrylate, preferably an aliphatic urethane acrylate, in an amount of 5-30wt-%, preferably 5-20 wt-%, based on the total weight of the composition; and/or
wherein the composition comprises an aminoacrylate, preferably an aliphatic aminoacrylate, in an amount of 5-30wt-%, preferably 10-20 wt-%, based on the total weight of the composition; and/or wherein the composition comprises a polyether acrylate in an amount of 5-30wt-%, preferably 10-20 wt-%, based on the total weight of the composition.

11. The composition of any preceding claim, wherein the composition further comprises one or more photoinitiators, preferably wherein the one or more photoinitiators are selected from the group consisting of 1-hydroxycyclohexyl phenyl ketone; polymeric or oligomeric 2-hydroxy-2-methyl-1-[4-(1-methyl-vinyl)phenyl]propane; 2-ethylhexyl 2-([1,1'-biphenyl]-4-ylcarbonyl)benzoate; acylphosphine oxides, such as diphenylphosphoryl-(2,4,6-trimethylphenyl)methanone or phenyl-bis-(2,4,6-trimethylbenzoyl) phosphine oxide; 1-{4-[benzoylphenylthio]phenyl}-2-methyl-2-(4-methylphenylsulphonyl)-propan1-one and 2-hydroxy-1-[4-[4-(2-hydroxy-2-methylpropanoyl)phenoxy|phenyl]-2-methylpropan-1-one.

12. A printed article comprising the composition of any one of claims 1-11, preferably wherein the printed article is selected from foils, plastic films, aluminum containers, and metallic films, preferably wherein the printed article is a retortable package.

13. The use of a 9-fold or higher alkoxylated glycerol acrylate monomer with a molecular weight higher than 500g/mol in an amount between 10-80wt-% based on the total weight of the composition in an energy curable ink, coating or primer composition suitable for retort packaging applications;
preferably wherein the 9-fold or higher alkoxylated glycerol acrylate monomer is an alkoxylated glycerol acrylate monomer as defined in any of claims 4-8.

14. A method of preparing a printed article comprising applying the energy curable ink, coating or primer composition of any one of claims 1-11 to a substrate, preferably wherein the printed article is a retortable package.

15. A method of retort packaging a foodstuff, comprising providing the printed retortable package of claim 12 and filling the retortable package with the foodstuff.

## Patentansprüche

1. Energiehärtbare Tinten-, Beschichtungs- oder Grundierungszusammensetzung, umfassend:
(a) 9-fach oder höher alkoxyliertes Glycerinacrylatmonomer mit einem Molekulargewicht von mehr als 500 g/mol in einer Menge zwischen 10-80 Gew.-%, bezogen auf das Gesamtgewicht der Zusammensetzung; und
(b) ein oder mehrere Oligomere.

2. Zusammensetzung nach Anspruch 1, wobei die Zusammensetzung ferner ein oder mehrere reaktive(s) Verdünnungsmittel umfasst, bei dem/denen es sich nicht um 6-fach oder höher alkoxylierte Glycerinacrylatmonomere handelt, wobei die reaktiven Verdünnungsmittel aus der Gruppe bestehend aus Diacrylaten, Triacrylaten und höher acrylierten Monomeren mit mehr als drei Acrylatgruppen, vorzugsweise höher acrylierten Monomeren mit mehr als drei Acrylatgruppen, ausgewählt sind;
vorzugsweise wobei das reaktive Verdünnungsmittel in einer Menge von 2-30 Gew.-%, weiter bevorzugt 3-20 Gew.-%, am meisten bevorzugt 4-15 Gew.-%, bezogen auf das Gesamtgewicht der Zusammensetzung, vorliegt.

3. Zusammensetzung nach Anspruch 2, wobei das eine oder die mehreren reaktive(n) Verdünnungsmittel aus der Gruppe bestehend aus Dipropylenglykoldiacrylat, Tripropylenglykoldiacrylat, Butandioldiacrylat, Hexandioldiacrylat, Trimethylolpropantriacrylat,
ethoxyliertem Trimethylolpropantriacrylat, Glycerinpropoxytriacrylat, Pentaerythritoltriacrylat, Dipropylenglykoldimethacrylat, Tripropylenglykoldimethacrylat, Butandioldimethacrylat, Hexandioldimethacrylat, Trimethylolpropantrimethacrylat, (alkoxyliertem) Pentaerythritoltetraacrylat, Dipentaerythritolpenta- und -hexaacrylat und alkoxylierten Versionen von DPHA, wie EO-DPHA mit Alkoxylierungsgraden zwischen 4 und 24, und Kombinationen davon ausgewählt sind;
vorzugsweise wobei es sich bei dem reaktiven Verdünnungsmittel um alkoxyliertes Pentaerythritoltetraacrylat handelt.

4. Zusammensetzung nach einem der vorhergehenden Ansprüche, wobei das Glycerolacrylatmonomer 9- bis 20-fach alkoxyliert, vorzugsweise 9- bis 15-fach alkoxyliert, ist.

5. Zusammensetzung nach einem der vorhergehenden Ansprüche, wobei es sich bei dem alkoxylierten Glycerinacrylatmonomer um ein alkoxyliertes Glycerintriacrylat, vorzugsweise ein 9- bis 20-fach alkoxyliertes Glycerintriacrylat, weiter bevorzugt ein 9- bis 15-fach alkoxyliertes Glycerintriacrylat, handelt.

6. Zusammensetzung nach einem der vorhergehenden Ansprüche, wobei es sich bei den Alkoxygruppen im alkoxylierten Glycerolacrylatmonomer um C2-C10-Alkoxygruppen, vorzugsweise C2-C6-Alkoxygruppen, weiter bevorzugt C2-C4-Alkoxygruppen, am meisten bevorzugt Propoxygruppen, handelt.

7. Zusammensetzung nach einem der vorhergehenden Ansprüche, wobei es sich bei dem Glycerinacrylatmonomer um ein propoxyliertes Glycerintriacrylat, vorzugsweise PO9-GPTA, handelt.

8. Zusammensetzung nach einem der Ansprüche 1-7, wobei das Molekulargewicht des alkoxylierten Glycerinacrylatmonomers mehr als 750 g/mol beträgt.

9. Zusammensetzung nach einem der vorhergehenden Ansprüche, wobei das eine oder die mehreren Oligomer(e) aus der Gruppe bestehend aus Aminoacrylaten, (Meth)acrylaten, Polyesteracrylaten, Urethanacrylaten, Polyetheracrylaten und Kombinationen davon ausgewählt sind; vorzugsweise wobei das eine oder die mehreren Oligomer(e) aus Urethanacrylaten, Aminoacrylaten oder Polyetheracrylaten oder einer Kombination davon ausgewählt sind; vorzugsweise wobei die Oligomere in einer Gesamtmenge von 5-60 Gew.-%, vorzugsweise 10-40 Gew.-%, bezogen auf das Gesamtgewicht der Zusammensetzung, vorliegen.

10. Zusammensetzung nach einem der vorhergehenden Ansprüche, wobei die Zusammensetzung ein Urethanacrylat, vorzugsweise ein aliphatisches Urethanacrylat, in einer Menge von 5-30 Gew.-%, vorzugsweise 5-20 Gew.-%, bezogen auf das Gesamtgewicht der Zusammensetzung, umfasst; und/oder
wobei die Zusammensetzung ein Aminoacrylat, vorzugsweise ein aliphatisches Aminoacrylat, in einer Menge von 5-30 Gew.-%, vorzugsweise 10-20 Gew.-%, bezogen auf das Gesamtgewicht der Zusammensetzung, umfasst; und/oder wobei die Zusammensetzung ein Polyetheracrylat in einer Menge von 5-30 Gew.-%, vorzugsweise 10-20 Gew.-%, bezogen auf das Gesamtgewicht der Zusammensetzung, umfasst.

11. Zusammensetzung nach einem der vorhergehenden Ansprüche, wobei die Zusammensetzung ferner einen oder mehrere Photoinitiator(en) umfasst, vorzugsweise wobei der eine oder die mehreren Photoinitiator(en) aus der Gruppe bestehend aus 1-Hydroxycyclohexylphenylketon; polymerem oder oligomerem 2-Hydroxy-2-methyl-1-[4-(1-methyl-vinyl)phenyl]propan; 2-ethylhexyl 2-([1,1'-biphenyl]-4-ylcarbonyl)benzoat; Acylphosphinoxiden, wie Diphenylphosphoryl-(2,4,6-trimethylphenyl)methanon oder Phenyl-bis-(2,4,6-trimethylbenzoyl)phosphinoxid; 1-{4-[Benzoylphenylthio]phenyl}-2-methyl-2-(4-methylphenylsulfonyl)-propan1-on und 2-Hydroxy-1-[4-[4-(2-hydroxy-2-methylpropanoyl)phenoxy]phenyl]-2-methylpropan-1-on ausgewählt sind.

12. Bedruckter Artikel, umfassend die Zusammensetzung nach einem der Ansprüche 1-11, vorzugsweise wobei der bedruckte Artikel aus Folien, Kunststofffolien, Aluminiumbehältern und Metallfolien ausgewählt ist, vorzugsweise wobei es sich bei dem bedruckten Artikel um eine retortierbare Packung handelt.

13. Verwendung eines 9-fach oder höher alkoxylierten Glycerinacrylatmonomers mit einem Molekulargewicht von mehr als 500 g/mol in einer Menge zwischen 10-80 Gew.-%, bezogen auf das Gesamtgewicht der Zusammensetzung, in einer energiehärtbaren Tinten-, Beschichtungs- oder Grundierungszusammensetzung, die für Retortenverpackungsanwendungen geeignet ist; vorzugsweise wobei es sich bei dem 9-fach oder höher alkoxylierten Glycerinacrylatmonomer um ein alkoxyliertes Glycerinacrylatmonomer nach einem der Ansprüche 4-8 handelt.

14. Verfahren zum Herstellen eines bedruckten Artikels, umfassend das Aufbringen der energiehärtbaren Tinten-, Beschichtungs- oder Grundierungszusammensetzung nach einem der Ansprüche 1-11 auf ein Substrat, vorzugsweise wobei es sich bei dem bedruckten Artikel um eine retortierbare Packung handelt.

15. Verfahren zum Retortenverpacken eines Lebensmittels, umfassend das Bereitstellen der bedruckten retortierbaren Packung nach Anspruch 12 und das Füllen der retortierbaren Packung mit dem Lebensmittel.

## Revendications

1. Composition d'encre, de revêtement ou d'apprêt durcissable par énergie comprenant :
(a) un monomère d'acrylate de glycérol alcoxylé 9 fois ou plus ayant un poids moléculaire supérieur à 500 g/mole en une quantité comprise entre 10 et 80 % en poids par rapport au poids total de la composition ; et
(b) un ou plusieurs oligomères.

2. Composition selon la revendication 1, dans laquelle la composition comprend en outre un ou plusieurs diluants réactifs qui ne sont pas des monomères d'acrylate de glycérol alcoxylé 6 fois ou plus, dans laquelle les diluants réactifs sont choisis dans un groupe constitué des diacrylates, des triacrylates et des monomères acrylés supérieurs contenant plus de trois groupes acrylate, de préférence des monomères acrylés supérieurs contenant plus de trois groupes acrylate ;
de préférence dans laquelle le diluant réactif est présent en une quantité de 2 à 30 % en poids, plus préférablement de 3 à 20 % en poids, le plus préférablement de 4 à 15 % en poids, par rapport au poids total de la composition.

3. Composition selon la revendication 2, dans laquelle un ou plusieurs diluants réactifs sont choisis dans un groupe constitué du diacrylate de dipropylène glycol, du diacrylate de tripropylène glycol, du diacrylate de butanediol, du diacrylate d'hexanediol, du triacrylate de triméthylol propane, du triacrylate de triméthylol propane éthoxylé, du triacrylate de glycérolpropoxy, du triacrylate de pentaérythritol, du diméthacrylate de dipropylène glycol, du diméthacrylate de tripropylène glycol, du diméthacrylate de butanediol, du diméthacrylate d'hexanediol, du triméthacrylate de triméthylol propane, du tétraacrylate de pentaérythritol (alcoxylé), du pentaacrylate et hexaacrylate de dipentaérythritol et des versions alcoxylées de DPHA, telles que l'EO-DPHA ayant des degrés d'alcoxylation compris entre 4 et 24, et de leurs combinaisons ;
de préférence dans laquelle le diluant réactif est un tétraacrylate de pentaérythritol alcoxylé.

4. Composition selon l'une quelconque des revendications précédentes, dans laquelle le monomère d'acrylate de glycérol est alcoxylé 9 à 20 fois, préférablement alcoxylé 9 à 15 fois.

5. Composition selon l'une quelconque des revendications précédentes, le monomère d'acrylate de glycérol alcoxylé étant un triacrylate de glycérol alcoxylé, préférablement un triacrylate de glycérol alcoxylé 9 à 20 fois, plus préférablement un triacrylate de glycérol alcoxylé 9 à 15 fois.

6. Composition selon l'une quelconque des revendications précédentes, dans laquelle les groupes alcoxy dans le monomère d'acrylate de glycérol alcoxylé sont des groupes alcoxy en C2-C10, de préférence des groupes alcoxy en C2-C6, plus préférablement des groupes alcoxy en C2-C4, le plus préférablement des groupes propoxy.

7. Composition selon l'une quelconque des revendications précédentes, dans laquelle le monomère d'acrylate de glycérol est un triacrylate de glycérol propoxylé, de préférence PO9-GPTA.

8. Composition selon l'une quelconque des revendications 1 à 7, dans laquelle le poids moléculaire du monomère d'acrylate de glycérol alcoxylé est supérieur à 750 g/mole.

9. Composition selon l'une quelconque des revendications précédentes, dans laquelle le ou les oligomères sont choisis dans un groupe constitué des aminoacrylates, des (méth-)acrylates, des acrylates de polyester, des acrylates d'uréthane, des acrylates de polyéther et de leurs combinaisons ; de préférence dans laquelle le ou les oligomères sont choisis parmi les acrylates d'uréthane, les aminoacrylates ou les acrylates de polyéther, ou une combinaison de ceux-ci ; de préférence dans laquelle les oligomères sont présents en une quantité totale de 5 à 60 % en poids, de préférence de 10 à 40 % en poids, par rapport au poids total de la composition.

10. Composition selon l'une quelconque des revendications précédentes, dans laquelle la composition comprend un acrylate d'uréthanne, de préférence un acrylate d'uréthanne aliphatique, en une quantité de 5 à 30 % en poids, de préférence de 5 à 20 % en poids, par rapport au poids total de la composition ; et/ou
dans laquelle la composition comprend un aminoacrylate, de préférence un aminoacrylate aliphatique, en une quantité de 5 à 30 % en poids, de préférence de 10 à 20 % en poids, par rapport au poids total de la composition ; et/ou
dans laquelle la composition comprend un acrylate de polyéther en une quantité de 5 à 30 % en poids, de préférence de 10 à 20 % en poids, par rapport au poids total de la composition.

11. Composition selon l'une quelconque des revendications précédentes, dans laquelle la composition comprend en outre un ou plusieurs photoinitiateurs, préférablement dans laquelle le ou les photoinitiateurs sont choisis dans un groupe constitué de 1-hydroxycyclohexylphénylcétone ; 2-hydroxy-2-méthyl-1-[4-(1-méthyl-vinyl)phényl]propane polymérique ou oligomérique ; 2-([1,1'-biphényl]-4-ylcarbonyl)benzoate de 2-éthylhexyle ; oxydes d'acylphosphine, tels que diphénylphosphoryl-(2,4,6-triméthylphényl)méthanone ou oxyde de phényl-bis-(2,4,6-triméthylbenzoyl)phosphine ; 1-{4-[benzoylphénylthio]phényl}-2-méthyl-2-(4-méthylphénylsulfonyl)-propan1-one et 2-hydroxy-1-[4-[4-(2-hydroxy-2-méthylpropanoyl)phénoxy]phényl]-2-méthylpropan-1-one.

12. Article imprimé comprenant la composition selon l'une quelconque des revendications 1 à 11, de préférence dans lequel l'article imprimé est choisi parmi des feuilles, des films plastiques, des récipients en aluminium et des films métalliques, de préférence dans lequel l'article imprimé est un emballage en autoclave.

13. Utilisation d'un monomère d'acrylate de glycérol alcoxylé 9 fois ou plus ayant un poids moléculaire supérieur à 500 g/mole en une quantité comprise entre 10 et 80 % en poids par rapport au poids total de la composition dans une composition d'encre, de revêtement ou d'apprêt durcissable par énergie appropriée pour des applications d'emballage en autoclave ;
de préférence dans laquelle le monomère d'acrylate de glycérol alcoxylé 9 fois ou plus est un monomère d'acrylate de glycérol alcoxylé tel que défini selon l'une quelconque des revendications 4 à 8.

14. Procédé de préparation d'un article imprimé comprenant l'application de la composition d'encre, de revêtement ou d'apprêt durcissable par énergie selon l'une quelconque des revendications 1 à 11 sur un substrat, de préférence dans lequel l'article imprimé est un emballage en autoclave.

15. Procédé d'emballage en autoclave d'un produit alimentaire, comprenant la fourniture de l'emballage en autoclave imprimé selon la revendication 12 et le remplissage de l'emballage en autoclave avec le produit alimentaire.
